# EUROPÄISCHE PATENTSCHRIFT

(11) **EP 3 154 879 B1**
(45) Veröffentlichungstag und Bekanntmachung des Hinweises auf die Patenterteilung: **06.06.2018**
(21) Anmeldenummer: 15726996.0
(22) Anmeldetag: 08.06.2015
(51) Int. Cl.: B65G 47/53, B65G 47/66, B65G 15/04

(54) **TRANSPORTSYSTEM**
TRANSPORT SYSTEM
SYSTÈME DE TRANSPORT

(30) Priorität: 13.06.2014 DE 102014108333
(43) Veröffentlichungstag der Anmeldung: 19.04.2017
(73) Patentinhaber: KHS GmbH, 44143 Dortmund (DE)
(72) Erfinder: GANZ, Simone, 44143 Dortmund (DE); DROSTE, Sebastian, 46348 Raesfeld (DE); ZENKE, Frank, 45529 Hattingen (DE)
(86) Internationale Anmeldenummer: PCT/EP2015/062726
(87) Internationale Veröffentlichungsnummer: WO 2015/189153

(56) Entgegenhaltungen:
- EP-A1- 0 286 080
- US-A1- 2008 047 805

## Beschreibung

Die Erfindung bezieht sich auf ein Transportsystem gemäß dem Oberbegriff Patentanspruch 1.
Transportsysteme bestehend aus mehreren Transporteuren sind hinlänglich bekannt. Insbesondere sind Transportsysteme bekannt, bei denen die Transporteure winklig zueinander verlaufen, d.h. die Transporteure unterschiedliche Transportrichtungen aufweisen.
Um ein Überführen eines Stückguts, beispielsweise eines Behälters von einem ersten Transporteur auf einen winklig zum ersten Transporteur verlaufenden zweiten Transporteur zu ermöglichen, ist es bekannt, Gleitelemente zu verwenden, mittels denen ein zwischen dem ersten Transporteur und dem zweiten Transporteur bestehender Zwischenraum überbrückt wird, um eine gleitende Überführung des geförderten Stückguts auf den zweiten Transporteur zu erreichen.

Nachteilig an den bekannten Transportsystemen ist, dass eine Heranführung des zweiten Transporteurs an den ersten Transporteur nur begrenzt möglich ist, da beim ersten Transporteur freiendseitig eine Umlenkeinheit vorgesehen ist, die ein unmittelbares Aneinanderfügen der Transporteure verhindert. Dadurch weisen die Gleitelemente häufig eine beträchtliche Länge auf, sodass das zu fördernde Stückgut im Bereich des Gleitelements lediglich indirekt gefördert wird, und zwar nicht durch Anlage des Stückgutes gegenüber dem ersten Transporteur sondern durch aufgebrachte Schiebekräfte von nachfolgendem Stückgut. Dadurch erfolgt bei Produktionsunterbrechungen bzw. bei Lücken im Stückgutstrom keine Selbsträumung des Transportsystems, d.h. kein automatisiertes Abfördern sämtlichen Stückguts, sondern es bleibt Stückgut auf den Gleitelementen stehen, das manuell weitergeschoben werden muss.

Die Druckschrift EP 0 286 080 A1 beschreibt ein Transportsystem gemäß dem Oberbegriff von Patentanspruch 1, sowie eine Vorrichtung zum Steuern des Transportweges von Gegenständen, die ein erstes Transportband, auf dem die Gegenstände zugeführt werden, ein oder mehrere parallel nebeneinander angeordnete zweite Transportbänder, die die Gegenstände weiterbefördern, ein oder mehrere Ablenkelemente zum Ablenken der Gegenstände von dem ersten Transportband auf eines der zweiten Transportbänder und eine Steuereinrichtung für die Ablenkelemente aufweist.
Die Druckschrift DE 495 421 A offenbart eine Förderanlage für einen Massenumschlag.
Die Druckschrift GB 0 638 056 A offenbart eine Förderanlage umfassend mehrere Fördereinrichtungen mit endlos umlaufenden Bändern.
Ferner offenbart die Druckschrift US 2011/0147162 A1 ein selbsträumendes Transportübergabesystem.
Aufgabe der Erfindung ist es damit, ein Transportsystem anzugeben, das in Bezug auf das selbsträumende Verhalten optimiert ausgebildet ist. Die Aufgabe wird durch die Merkmale des unabhängigen Patentanspruch 1 gelöst. Gemäß einem ersten Aspekt bezieht sich die Erfindung auf ein Transportsystem für Stückgut. Das Transportsystem umfasst zumindest einen ersten Transporteur, einen zweiten Transporteur und einen dritten Transporteur. Der erste Transporteur weist hierbei eine Transportrichtung auf, die unterschiedlich zur zweiten Transportrichtung des zweiten Transporteurs und zur dritten Transportrichtung des dritten Transporteurs ist. Der zweite Transporteur wird dabei durch ein umlaufendes Transportelement gebildet und ist als Übergabetransporteur zur Überführung des von dem ersten Transporteur geförderten Stückguts auf den dritten Transporteur oder von dem dritten Transporteur auf den ersten Transporteur in einer Transportebene ausgebildet. Vorzugsweise sind die ersten bis dritten Transporteure zur Förderung des Stückguts in einer gemeinsamen Transportebene ausgebildet, d.h. die erste bis dritte Transportrichtung liegt in einer gemeinsamen oder im Wesentlichen in einer gemeinsamen Transportebene. Der zweite Transporteur ist dabei zur Rückführung seines umlaufenden Transportelements oberhalb der Transportebene ausgebildet, d.h. das Transportelement ist schleifenartig angeordnet, wobei ein Schleifenabschnitt, auf dem die Rückführung des Transportelements erfolgt, oberhalb der Transportebene des Stückguts verläuft.

Dadurch wird erreicht, dass der Abstand zwischen dem ersten Transporteur und dem zweiten Transporteur minimiert werden kann, da sich aufgrund der oberseitigen Rückführung des zweiten Transporteurs unterhalb des zweiten Transporteurs ein Bauraum ergibt, in den zumindest teilweise der erste Transporteur mit seinem Umlenkbereich eintauchen kann, sodass eine unmittelbare Heranführung des ersten Transporteurs an den zweiten Transporteur erreicht wird.

In einem Ausführungsbeispiel verläuft der erste Transporteur rechtwinklig oder im Wesentlichen rechtwinklig zum zweiten Transporteur. Damit erfolgt durch den ersten Transporteur eine unmittelbare Aufförderung des Stückguts auf den zweiten Transporteur, und zwar ohne jegliche Zwischenförderung, beispielsweise in Form eines Rütteltisches o.ä.

Alternativ kann der erste Transporteur in einem spitzen Winkel zum zweiten Transporteur verlaufen, wobei sich dieser spitze Winkel in die der zweiten Transportrichtung des zweiten Transporteurs entgegengesetzte Richtung öffnet. In anderen Worten wird durch den ersten Transporteur eine Förderung des Stückguts in einer Transportrichtung bewirkt, die eine Transportrichtungskomponente parallel zur Transportrichtung des zweiten Transporteurs aufweist. Damit kann die Umfallneigung des zu transportierenden Stückguts wesentlich verringert werden.

Bevorzugt verlaufen der zweite und der dritte Transporteur parallel oder im Wesentlichen parallel zueinander. Die Überführung des Stückguts von dem zweiten Transporteur auf den dritten Transporteur kann insbesondere durch eine Ablenkeinrichtung, beispielsweise durch eine Gleiteinrichtung, erreicht werden, die schräg zur Transportrichtung des zweiten Transportelements verläuft und durch das Auffördern des Stückguts durch den zweiten Transporteur auf diese Ablenkeinrichtung eine seitliche gleitende Überführung des Stückguts auf den dritten Transporteur bewirkt. Der zweite und dritte Transporteur können dabei identische oder unterschiedliche Transportgeschwindigkeiten aufweisen.

In einem bevorzugten Ausführungsbeispiel weist der erste Transporteur eine Umlenkeinheit auf, die abschnittsweise unterhalb des zweiten Transportelements angeordnet ist. In anderen Worten reicht der erste Transporteur mit seinem Umlenkbereich in den unterhalb des zweiten Transporteurs befindlichen Bauraum hinein. Dadurch wird ermöglicht, dass das zu fördernde Stückgut durch den ersten Transporteur unmittelbar auf den zweiten Transporteur aufgefördert wird und das Stückgut nach Verlassen der Anlage gegenüber dem Transportelement des ersten Transporteurs mit einem wesentlichen Bodenabschnitt gegenüber dem Transportelement des zweiten Transporteurs aufliegt, sodass auch ohne Aufschieben eines nachfolgenden Stückguts eine Abförderung des Stückguts durch den zweiten Transporteur ermöglicht wird.

In einem weiteren Ausführungsbeispiel wird der zweite Transporteur durch zwei zueinander parallel verlaufende Transportelemente gebildet, die mit unterschiedlicher Geschwindigkeit angetrieben werden. Insbesondere weist der zweite Transporteur ein erstes Transportelement auf, das dem ersten Transporteur benachbart vorgesehen ist und mit einer geringeren Transportgeschwindigkeit angetrieben wird als das weitere Transportelement, das dem ersten Transporteur entfernt bzw. dem dritten Transporteur benachbart vorgesehen ist. Dadurch wird erreicht, das aufgrund der niedrigen Transportgeschwindigkeit des ersten Transportelements des zweiten Transporteurs die Umfallneigung des vom ersten Transporteur auf das erste Transportelement des zweiten Transporteurs aufgeförderten Stückguts bei dieser Übergabe wesentlich minimiert ist und bei anschließender Aufförderung auf das zweite Transportelement des zweiten Transporteurs eine Beschleunigung des Stückguts erfolgt, und zwar insbesondere derart, dass die Umfallneigung des vom zweiten Transporteur auf den dritten Transporteur überführten Stückguts reduziert ist.

Gemäß einem weiteren Ausführungsbeispiel ist zwischen der Transportebene und der Rückführung des umlaufenden Transportelements des zweiten Transporteurs eine Durchlassöffnung für das zu fördernde Stückgut ausgebildet. Insbesondere weist der zweite Transporteur einen Tragrahmen auf, der oberhalb und beabstandet zu dieser Transportebene angeordnet ist. Der Abstand ist hierbei insbesondere derart gewählt, dass durch die im Tragrahmen vorgesehene Durchführungsöffnung eine Durchführung von Stückgut mit gängigen Stückguthöhen ermöglicht wird.

Bevorzugt ist zwischen dem ersten und zweiten Transporteur zumindest ein eine Gleitfläche bildendes Gleitelement vorgesehen. Durch dieses Gleitelement wird eine absatzfreie oder nahezu absatzfreie gleitende Überführung des Stückguts vom ersten Transporteur auf den zweiten Transporteur erreicht, wobei das zu überführende Stückgut durch den ersten Transporteur vorzugsweise solange gefördert wird, bis das Stückgut mit einem ausreichenden Flächenabschnitt auf dem Transportelement des zweiten Transporteurs aufsteht, sodass durch diesen eine alleinige Weiterförderung ermöglicht wird, und zwar ohne weiteres Aufschieben durch nachfolgendes Stückgut.

Bevorzugt ist das Gleitelement abschnittsweise kammartig ausgebildet. Dadurch ist das Gleitelement an ein Transportelement des ersten Transporteurs angepasst, das Transportkettenelemente mit einer Vielzahl von zueinander beabstandet angeordneten Stegen aufweist, die mit ihrer Längserstreckung parallel zur Förderrichtung des ersten Transporteurs verlaufen. Damit wird erreicht, dass auch beim Übergang zwischen dem Transportelement des ersten Transporteurs und dem Gleitelement kein störender Absatz auftritt, an dem das Stückgut zum Umfallen neigen würde. Ferner wird durch die das kammartig ausgebildete Gleitelement durchgreifenden Stege eine möglichst lange Weiterförderung des Stückguts auf das Transportelement des zweiten Transporteurs erreicht.

Vorzugsweise weist das Gleitelement einen Stützabschnitt auf, der eine Anlagefläche für das Transportelement des zweiten Transporteurs bildet. Dadurch wird eine Unterstützung des Transportelements des zweiten Transporteurs in vertikaler Richtung durch das Gleitelement bewirkt, was zu einer optimierten Anordnung des Transportelements des zweiten Transporteurs gegenüber dem Transportelement des ersten Transporteurs führt.

Weiterhin vorzugsweise weist der Stützabschnitt eine, eine seitliche Führung des Transportelements des zweiten Transporteurs bewirkende Ausnehmung auf. Vorzugsweise weist das Transportelement des zweiten Transporteurs bzw. die das Transportelement bildenden Kettenelemente einen nach unten abstehenden Vorsprung auf, der in die Ausnehmung eingreift. Durch diesen Formschluss wird eine Seitenführung quer zur Transportrichtung erreicht, sodass das Transportelement des zweiten Transporteurs stets lagerichtig gegenüber dem ersten Transporteur vorbeigeführt wird.

Gemäß einem Ausführungsbeispiel weist das Transportelement des zweiten Transporteurs an der dem ersten Transporteur zugewandten Kante eine die Materialstärke des Transportelements verringernde Ausnehmung auf. Durch diese Ausnehmung wird erreicht, dass der zweite Transporteur bzw. dessen Transportelement möglichst nahe an dem ersten Transporteur herangeführt werden kann, und zwar insbesondere auch in den Bereich, in dem eine durch den Umlenkbereich des ersten Transporteurs bedingte Bauraumreduzierung des Transportelements des zweiten Transporteurs notwendig ist.

Unter Stückgut im Sinne der Erfindung wird jegliches Transportgut verstanden, das sich als Transporteinheit am Stück transportieren lässt. Dies sind insbesondere Verpackungen, Behälter etc.

Unter Behälter im Sinne der Erfindung werden sämtliche Behälter verstanden, insbesondere Flaschen, Dosen, Tuben, Pouches etc.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft ein erfindungsgemäßes Transportsystem zum Abfördern von Stückgut von einem ersten Transporteur in einer perspektivischen Darstellung;
- Fig. 2: beispielhaft ein erfindungsgemäßes Transportsystem in einer seitlichen Darstellung; und
- Fig. 3: beispielhaft der Überführungsbereich von dem ersten Transporteur zum zweiten Transporteur in einer Ausschnittdarstellung, und
- Fig. 4: beispielhaft ein erfindungsgemäßes Transportsystem zum Zufördern von Stückgut zu einem ersten Transporteur in einer perspektivischen Darstellung.

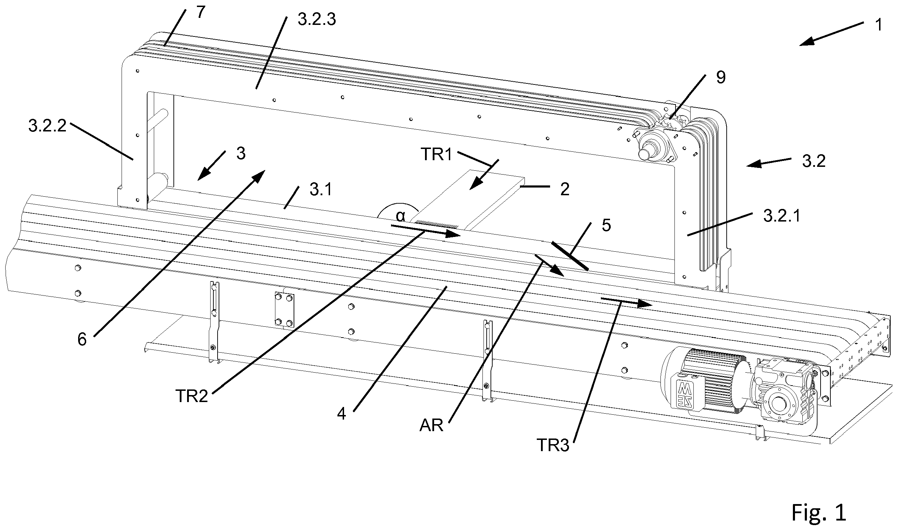

In Figur 1 ist mit dem Bezugszeichen 1 ein erfindungsgemäßes Transportsystem bezeichnet. Das Transportsystem 1 besteht aus mehreren Transporteuren, und zwar aus einem im ersten Transporteur 2, einem zweiten Transporteur 3, und einem dritten Transporteur 4. Die Transporteure 2, 3, 4 weisen jeweils zumindest ein Transportelement auf, das umlaufend an dem jeweiligen Transporteur vorgesehen ist. Das Transportelement kann insbesondere durch ein Transportband oder eine Transportkette beispielsweise eine Scharnierbandkette gebildet sein. Alternativ kann das Transportelement auch durch ein Modulargliederband gebildet sein, das beispielsweise aus einer Vielzahl von thermoplastischen Spritzgussteilen zusammengesetzt ist. Diese Spritzgussteile können insbesondere in Transportrichtung verlaufende Stege aufweisen, die beabstandet bzw. auf Lücke zueinander angeordnet sind, d.h. kammartig ausgebildet sind.

Aufgabe des Transportsystems 1 ist es, durch den ersten Transporteur 2 geförderte Stückgüter, beispielsweise Behälter, mittels des zweiten Transporteurs 3, der als Übergabetransporteur zwischen dem ersten und dritten Transporteur 2, 4 fungiert, auf den dritten Transporteur 4 zu übergeben. Der erste Transport 2 verläuft im gezeigten Ausführungsbeispiel in einem rechten Winkel oder im Wesentlichen im rechten Winkel zu dem zweiten Transporteur 3 bzw. zum dritten Transporteur 4. Alternativ kann der erste Transporteur 2 in einem spitzen Winkel α zum zweiten Transporteur 3 verlaufen, wobei sich dieser spitze Winkel α in die der Transportrichtung TR2 des zweiten Transporteurs 3 entgegengesetzte Richtung öffnet. In andere Worten verläuft die Transportrichtung TR1 des ersten Transporteurs 2 zu der Transportrichtung TR2 des zweiten Transporteurs 3 in einem spitzen Winkel a, der sich entgegen der Transportrichtung TR2 öffnet oder die Transportrichtung TR1 und TR2 verlaufen rechtwinklig zueinander. Der zweite Transporteur 3 hingegen verläuft parallel zum dritten Transporteur 4, d.h. die Transportrichtung TR2 verläuft parallel zur Transportrichtung TR3 des dritten Transporteurs 4. Des Weiteren sind die Transportebenen, in denen das Stückgut durch die jeweiligen Transporteure 2, 3, 4 gefördert wird, höhengleich angeordnet, d.h. die Transportebenen der Transporteure 2, 3, 4 liegt in einer gemeinsamen oder im Wesentlichen in einer gemeinsamen Ebene, die vorzugsweise horizontal ausgerichtet ist.

Die von dem ersten Transporteur 2 geförderten Stückgüter werden aufgrund der winkligen Anordnung der Transportrichtung TR1 zur Transportrichtung TR2 durch den ersten Transporteur 2 auf den zweiten Transporteur 3 zugefördert und an diesen übergeben. Anschließend werden die Stückgüter nach dem Übergeben in Transportrichtung TR2 gefördert und gelangen an eine oder mehrere Ablenkeinrichtungen 5, mittels denen die Stückgüter in einer in einem spitzen Winkel zur Transportrichtung TR2 verlaufenden Ablenkrichtung AR auf den dritten Transporteur 4 aufgefördert bzw. an diesen übergeben werden und anschließend durch diesen dritten Transporteur 4 in Transportrichtung TR3 abgefördert werden. Die Ablenkeinrichtung 5 kann insbesondere durch ein Gleitblech gebildet werden, das eine umfangsseitige Anlagefläche für das zu fördernde Stückgut bildet.

Um insbesondere bei Lücken im transportierten Stückgutstrom oder bei Prozessunterbrechungen ein selbstabräumendes Transfersystem zu schaffen, muss eine Übergabe des Stückguts vom ersten Transporteur 2 auf den zweiten Transporteur 3 derart erfolgen, dass die Überführung vom ersten Transporteur 2 auf den zweiten Transporteur 3 ausschließlich durch Transportkräfte bewirkt wird, die vom ersten Transporteur 2 auf das zu fördernde Stückgut aufgebracht werden, und nicht durch eine indirekte Förderung, d.h. durch Aufschieben von nachfolgendem Stückgut. Hierzu ist es nötig, den ersten Transporteur 2 derart nahe an den zweiten Transporteur 3 heranzuführen, dass ein lückenfreier bzw. ein nahezu lückenfreier Übergabebereich zwischen dem ersten Transporteur 2 und dem zweiten Transporteur 3 geschaffen wird.

Zur Schaffung eines möglichst lückenfreien Übergangs ist der zweite Transporteur 3 zur Rückführung des umlaufenden Förderelements 3.1 oberhalb der Transportebene, auf der das Stückgut durch den zweiten Transporteur 3 bzw. auch durch den ersten und dritten Transporteur 2, 4 gefördert wird, ausgebildet. Zur oberseitigen Rückführung des Transportelements 3.1 ist ein Tragrahmen 3.2 vorgesehen, mittels dem das umlaufende Transportelement 3.1 des zweiten Transporteurs 3 gehalten ist. Der Tragrahmen 3.2 besteht insbesondere aus zwei in Bezug auf die Transportebene nach oben abstehenden Tragrahmenabschnitten 3.2.1, 3.2.2 und einem die Tragrahmenabschnitte 3.2.1, 3.2.2 verbindenden Tragrahmenabschnitt 3.2.3. Die Tragrahmenabschnitte 3.2.1, 3.2.2 verlaufen insbesondere lotrecht zu der Transportebene, der weitere Tragrahmenabschnitt 3.2.3 parallel und beabstandet zu dieser Transportebene, sodass durch den Tragrahmen 3.2 eine Durchführungsöffnung 6 geschaffen wird, durch die hindurch das zu fördernde Stückgut von dem ersten Transporteur 2 über den zweiten Transporteur 3 hindurchgefördert wird. Der Tragrahmen 3.2 kann insbesondere die Umlenkrollen 7 bzw. die Antriebseinrichtung 9 des zweiten Transporteurs 3 aufnehmen.

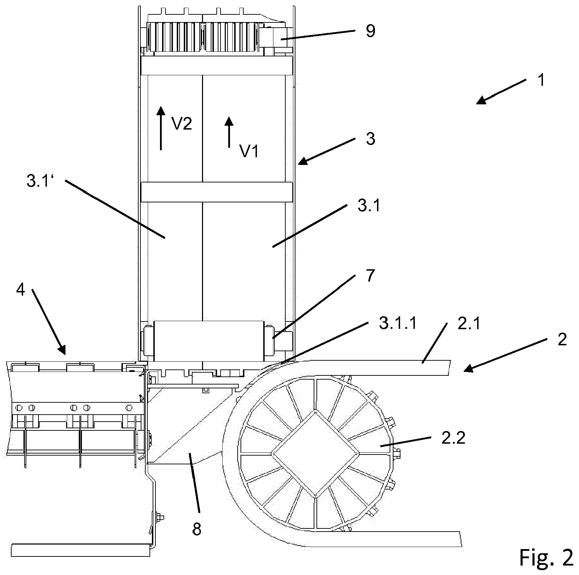

Figur 2 zeigt den Übergangsbereich zwischen dem ersten Transporteur 2 und dem zweiten Transporteur 3 näher im Detail. Der erste Transporteur 2 weist eine Umlenkeinheit 2.2 auf, mittels der das Transportelement 2.1 des ersten Transporteurs 2 zu dessen umlaufendem Antrieb umgelenkt wird. Durch die oberseitige Rückführung des zweiten Transporteurs 3 wird unterhalb des zweiten Transporteurs 3 ein Bauraum geschaffen, in den der erste Transporteur 2 insbesondere mit dessen Umlenkbereich, d.h. mit seiner Umlenkeinheit 2.2 hineinreichen kann. Insbesondere ist die Umlenkeinheit 2.2 zumindest abschnittsweise unterhalb des Transportelements 3.1 des zweiten Transporteurs 3 vorgesehen, d.h. der zweite Transporteur 2 ragt teilweise in den unterhalb des zweiten Transporteurs 3 vorgesehenen Bauraum hinein. Dadurch wird erreicht, dass die Transportzone des ersten Transporteurs 2, in der eine Förderung des Stückguts durch das Transportelement 2.1 durch Anlage des Stückgutbodens an dem Transportelement 2.1 erfolgt, möglichst nahe bzw. lückenfrei an das Transportelement 3.1 des zweiten Transporteurs 3 anschließt, sodass ein unmittelbares Auffördern des Stückguts von dem ersten Transporteur 2 auf den zweiten Transporteur 3 erfolgt.

Wie insbesondere in Figur 2 ersichtlich, kann der zweite Transporteur 3 durch zwei oder mehr zueinander parallel verlaufende Transportelemente 3.1, 3.1', gebildet werden. Insbesondere ist das dem ersten Transporteur 2 benachbart liegende Transportelement 3.1 des zweiten Transporteurs 3 mit einer ersten Geschwindigkeit V1 und das dem dritten Transporteur 4 benachbart liegende Transportelement 3.1' des zweiten Transporteurs 3 mit einer zweiten Geschwindigkeit V2 angetrieben, wobei die erste Geschwindigkeit V1 kleiner ist als zweite Geschwindigkeit V2 (V1 < V2). Dadurch kann erreicht werden, dass das von dem ersten Transporteur 2 an das Transportelement 3.1 des zweiten Transporteurs 3 übergebene Stückgut aufgrund der verringerten Umlaufgeschwindigkeit des Transportelements 3.1 umfallsicher übergeben wird. Bei dem Auflaufen des Stückguts auf die Ablenkeinrichtung 5 erfolgt dann eine Übergabe an das weitere Transportelement 3.1' und dabei eine Beschleunigung auf die zweite Geschwindigkeit V2, um damit eine Geschwindigkeitsanpassung an die Transportgeschwindigkeit des dritten Transporteurs 4 zu erreichen. Die Transportgeschwindigkeit des dritten Transporteurs 4 kann dabei gleich der zweiten Geschwindigkeit V2 oder größer als diese zweite Geschwindigkeit V2 sein.

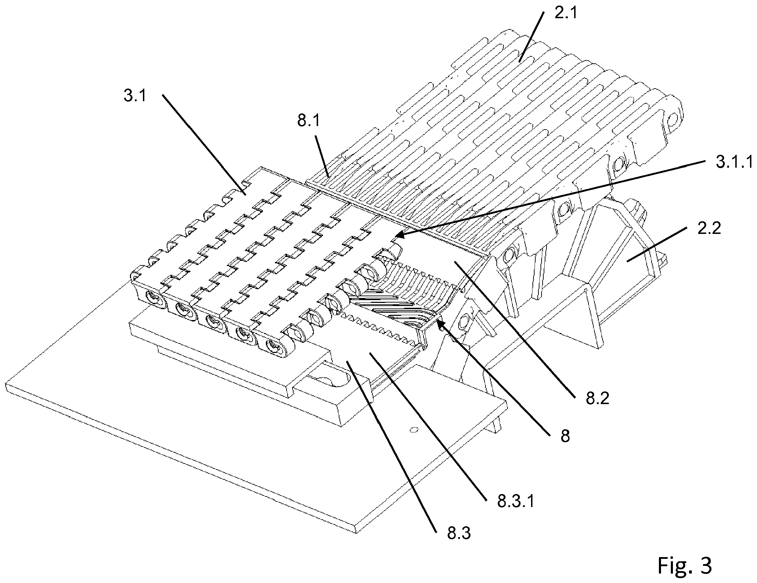

Figur 3 zeigt den Übergabebereich zwischen dem ersten Transporteur 2 und dem zweiten Transporteur 3 näher im Detail. Um eine absatzfreie Überführung des Stückguts von dem ersten Transporteur 2 auf den zweiten Transporteur 3 zu erreichen ist im Übergangsbereich ein Gleitelement 8 vorgesehen. Dieses Gleitelement 8 weist einen ersten Gleitelementabschnitt 8.1 auf, der den Übergabebereich zwischen dem ersten und zweiten Transporteur 2, 3 überspannt und eine Gleitfläche für das zu überführende Stückgut bildet.

Der erste Transporteur 2 weist ein Transportelement 2.1 in Form einer Transportkette auf, deren Kettenglieder durch eine Vielzahl von parallel zueinander und auf Lücke angeordneten Stegen gebildet sind. In anderen Worten sind die Kettenglieder des Transportelements 2.1 kammartig ausgebildet. Der erste Gleitelementabschnitt 8.1 ist ebenfalls kammartig ausgebildet und weist eine Vielzahl von Zähnen auf, die in die an den Kettengliedern ausgebildeten Lücken eingreifen. Dadurch wird erreicht, dass bei Überführung des Stückguts vom ersten Transporteur 2 auf den ersten Gleitelementabschnitt 8.1 des Gleitelements 8 keine Kante entsteht, an der das zu fördernde Stückgut zum Umfallen neigt. Das Transportelement 3.1 des zweiten Transporteurs 3 ist beispielsweise ebenfalls als Scharnierkettenband ausgebildet. Zur Erreichung einer maximalen Annäherung des zweiten Transporteurs 3 an den ersten Transporteur 2 weist das Transportelement 3.1 an der den ersten Transporteur 2 zugewandten Kante eine Ausnehmung 3.1.1 auf. Die Ausnehmung 3.1.1 kann insbesondere bogenförmig ausgebildet sein, um sich an den durch die Umlenkung des ersten Transporteurs 2 unterhalb des zweiten Transporteurs 3 ergebenen Bauraum anzupassen. Das Gleitelement 8 weist einen an die Ausnehmung 3.1.1 des Transportelements 3 angepassten zweiten Gleitelementabschnitt 8.2 auf, der eine Anlagefläche für das Transportelement 3.1 im Bereich dieser Ausnehmung 3.1.1 bildet.

Ferner weist das Gleitelement 8 einen dritten Gleitelementabschnitt 8.3 auf, der horizontal oder im Wesentlichen horizontal unterhalb des Transportelements 3.1 verläuft und ebenfalls eine Auflage bzw. Gleitfläche für das Transportelement 3.1 bildet. Im dritten Gleitelementabschnitt 8.3 ist vorzugsweise eine Nut oder Aussparung 8.3.1 vorgesehen, die in Transportrichtung TR2 des zweiten Transporteurs 3 verläuft. Das Transportelement 3.1 bzw. die Kettenglieder des Transportelements 3.1 können unterseitige Vorsprünge aufweisen, die an die Aussparung bzw. Nut 8.3.1 formangepasst sind, sodass durch das Eingreifen des Vorsprungs in die Nut bzw. Aussparung 8.3.1 eine seitliche, d.h. quer zur Transportrichtung TR2 des zweiten Transporteurs 3 verlaufende Seitenführung des Transportelements 3.1 bewirkt wird.

Das in Figur 1 gezeigte Transportsystem 1 ist als Abfördersystem ausgebildet, wobei beispielsweise der erste Transporteur 2 durch einen Pasteur hindurch verläuft und den Pasteurisierungsprozess durchlaufenes Stückgut dem zweiten Transporteur 3 zufördert.

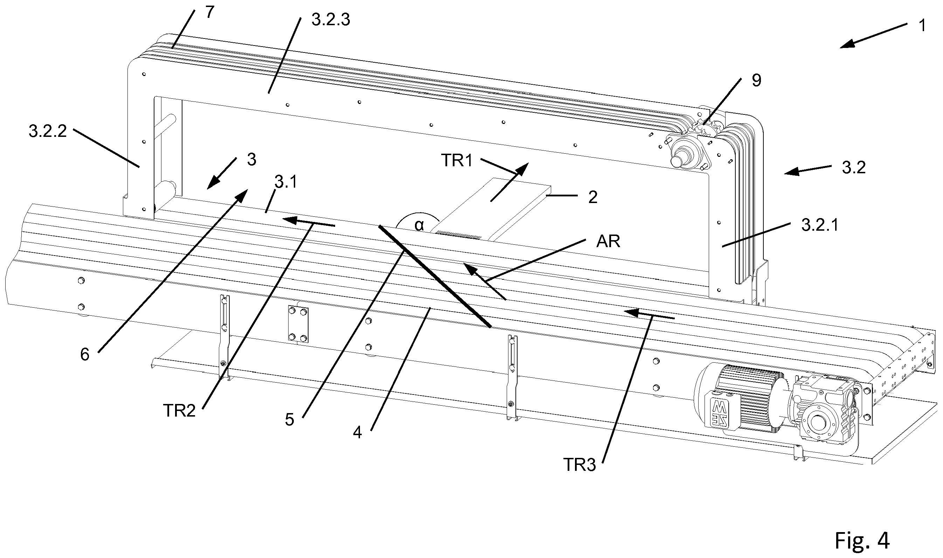

Fig. 4 zeigt ein alternatives Ausführungsbeispiel des Transportsystems 1, bei dem der erste Transporteur 2 das Abförderorgan bildet, d.h. das Stückgut wird von dem dritten Transporteur 4 über den zweiten Transporteur 3 dem ersten Transporteur 2 zugefördert. Beispielsweise bildet der erste Transporteur 2 ein Transportorgan in einem Pasteur, so dass der zweite und dritte Transporteur 3, 4 die Zufördereinrichtung zu dem Transportorgan des Pasteurs bilden. Die Ablenkeinrichtung 5 bewirkt dabei das Auffördern des Stückguts vom zweiten bzw. dritten Transporteur 3, 4 auf den ersten Transporteur 2.

### Bezugszeichenliste

- 1: Transportsystem
- 2: erster Transporteur
- 2.1: Transportelement
- 2.2: Umlenkeinheit
- 3: zweiter Transporteur
- 3.1, 3.1': Transportelement
- 3.1.1: Ausnehmung
- 3.2: Tragrahmen
- 3.2.1, 3.2.2: Tragrahmenabschnitt
- 3.2.3: Tragrahmenabschnitt
- 4: dritter Transporteur
- 5: Ablenkeinrichtung
- 6: Durchführungsöffnung
- 7: Umlenkrolle
- 8: Gleitelement
- 8.1: erster Gleitelementabschnitt
- 8.2: zweiter Gleitelementabschnitt
- 8.3: dritter Gleitelementabschnitt
- 8.3.1: Nut/Aussparung
- 9: Antriebseinrichtung
- α: Winkel
- AR: Ablenkrichtung
- TR1, TR2, TR3: Transportrichtung
- v1: erste Geschwindigkeit
- v2: zweite Geschwindigkeit

## Patentansprüche

1. Transportsystem für Stückgut umfassend zumindest einen ersten, einen zweiten und einen dritten Transporteur (2, 3, 4), wobei der zweite Transporteur (3) ein umlaufendes Transportelement (3.1) aufweist und als Übergabetransporteur zur Überführung des Stückguts von dem ersten Transporteur (2) auf den dritten Transporteur (4) oder von dem dritten Transporteur (4) auf den ersten Transporteur (2) in einer Transportebene ausgebildet ist und wobei der zweite Transporteur (3) zur Rückführung des umlaufenden Transportelements (3.1) oberhalb der Transportebene ausgebildet ist, **dadurch gekennzeichnet, dass** der erste Transporteur (2) eine erste Transportrichtung (TR1) aufweist, die unterschiedlich zu der zweiten Transportrichtung (TR2) des zweiten Transporteurs (3) und der dritten Transportrichtung (TR3) des dritten Transporteurs (3) ausgerichtet ist und dass der erste Transporteur (2) eine Umlenkeinheit (2.2) aufweist, die zumindest abschnittsweise unterhalb des zweiten Transportelements (3.1) angeordnet ist, so dass der Umlenkbereich des ersten Transporteurs (2) zumindest teilweise unter den zweiten Transporteur (2) eintaucht.

2. Transportsystem nach Anspruch 1, **dadurch gekennzeichnet, dass** der erste Transporteur (2) rechtwinklig oder im Wesentlichen rechtwinklig zum zweiten Transporteur (3) verläuft.

3. Transportsystem nach Anspruch 1, **dadurch gekennzeichnet, dass** der erste Transporteur (2) in einem spitzen Winkel zum zweiten Transporteur (3) verläuft, der sich in die der zweiten Transportrichtung (TR2) des zweiten Transporteurs (2) entgegengesetzte Richtung öffnet.

4. Transportsystem nach einem der vorhergehenden Ansprüche, **dadurch gekennzeichnet, dass** der zweite und dritte Transporteur (3, 4) zueinander parallel oder im Wesentlichen parallel verlaufen.

5. Transportsystem nach einem der vorhergehenden Ansprüche, **dadurch gekennzeichnet, dass** der zweite Transporteur (3) durch zwei zueinander parallel verlaufende Transportelemente (3.1, 3.1') gebildet wird, die mit unterschiedlicher Geschwindigkeit (v1, v2) angetrieben werden.

6. Transportsystem nach einem der vorhergehenden Ansprüche, **dadurch gekennzeichnet, dass** zwischen der Transportebene und der Rückführung des umlaufenden Transportelements (3.1) des zweiten Transporteurs (3) eine Durchführungsöffnung (6) für das zu fördernde Stückgut ausgebildet ist.

7. Transportsystem nach einem der vorhergehenden Ansprüche, **dadurch gekennzeichnet, dass** zwischen dem ersten und dem zweiten Transporteur (2, 3) ein zumindest eine Gleitfläche bildendes Gleitelement (8) vorgesehen ist.

8. Transportsystem nach Anspruch 7, **dadurch gekennzeichnet, dass** das Gleitelement (8) abschnittsweise kammartig ausgebildet ist.

9. Transportsystem nach Anspruch 7 oder 8, **dadurch gekennzeichnet, dass** das Gleitelement (8) einen Stützabschnitt (8.3) aufweist, der eine Anlagefläche für das Transportelement (3.1) des zweiten Transporteurs (3) bildet.

10. Transportsystem nach Anspruch 9, **dadurch gekennzeichnet, dass** der Stützabschnitt (8.3) eine, eine seitliche Führung des Transportelements (3.1) des zweiten Transporteurs (3) bildende Aussparung (8.3.1) aufweist.

11. Transportsystem nach einem der vorhergehenden Ansprüche, **dadurch gekennzeichnet, dass** das Transportelement (3.1) des zweiten Transporteurs (3) an der dem ersten Transporteur (2) zugewandten Kante eine die Materialstärke des Transportelements (3.1) verringernde Ausnehmung (3.1.1) aufweist.

## Claims

1. Transport system for general cargo, comprising at least one first, one second, and one third conveyor (2, 3, 4), wherein the second conveyor (3) comprises a rotating transport element (3.1) and is designed as a transfer conveyor for transferring the general cargo from the first conveyor (2) onto the third conveyor (4) or from the third conveyor (4) onto the first conveyor (2) in one transport plane, and wherein the second conveyor (3) is formed above the transport plane for recirculating the rotating transport element (3.1), **characterised in that** the first conveyor (2) exhibits a first transport direction (TR1), the orientation of which is different from the second transport direction (TR2) of the second conveyor (3) and the transport direction (TR3) of the third conveyor (3), and that the first conveyor (2) comprises a deflection unit (2.2), which is arranged at least in sections beneath the second transport element (3.1) such that the deflection region of the first conveyor (2) is introduced at least in part beneath the second conveyor (2).

2. Transport system according to claim 1, **characterised in that** the first conveyor (2) runs at a right angle or essentially at a right angle to the second conveyor (3).

3. Transport system according to claim 1, **characterised in that** the first conveyor (2) runs at an acute angle to the second conveyor (3), which opens in the direction opposite to the second transport direction (TR2) of the second conveyor (2).

4. Transport system according to any one of the preceding claims, **characterised in that** the second and third conveyors (3, 4) run parallel or essentially parallel to one another.

5. Transport system according to any one of the preceding claims, **characterised in that** the second conveyor (3) is formed by two transport elements (3.1, 3.1') running parallel to one another, which are driven at different speeds (v1, v2).

6. Transport system according to any one of the preceding claims, **characterised in that** a passage opening (6) for the general cargo being conveyed is formed between the transport plane and the recirculating plane of the rotating transport element (3.1) of the second conveyor (3).

7. Transport system according to any one of the preceding claims, **characterised in that** a slide element (8) forming at least one sliding surface is provided between the first and the second conveyors (2, 3).

8. Transport system according to claim 7, **characterised in that** the slide element (8) is formed in sections in the form of a comb.

9. Transport system according to claim 7 or 8, **characterised in that** the slide element (8) comprises a support section (8.3), which forms a support contact surface for the transport element (3.1) of the second conveyor (3).

10. Transport system according to claim 9, **characterised in that** the support section (8.3) comprises a recess (8.3.1) which forms a lateral guide of the transport element (3.1) of the second conveyor (3).

11. Transport system according to any one of the preceding claims, **characterised in that** the transport element (3.1) of the second conveyor (3) comprises, on the edge facing towards the first conveyor (2), a cut-out (3.1.1) which reduces the material thickness of the transport element (3.1).

## Revendications

1. Système de transport pour des marchandises de détail comprenant au moins un premier, un deuxième et un troisième transporteur (2, 3, 4), dans lequel le deuxième transporteur (3) présente un élément de transport (3.1) tournant et est réalisé en tant que transporteur de remise pour le transfert des marchandises de détail du premier transporteur (2) au troisième transporteur (4) ou du troisième transporteur (4) au premier transporteur (2) dans un plan de transport et dans lequel le deuxième transporteur (3) est réalisé pour le retour de l'élément de transport (3.1) tournant au-dessus du plan de transport, **caractérisé en ce que** le premier transporteur (2) présente un premier sens de transport (TR1) qui est orienté différemment du deuxième sens de transport (TR2) du deuxième transporteur (3) et du troisième sens de transport (TR3) du troisième transporteur (3) et que le premier transporteur (2) présente une unité de déviation (2.2) qui est disposée au moins par sections en dessous du deuxième élément de transport (3.1) de sorte que la zone de déviation du premier transporteur (2) pénètre au moins partiellement sous le deuxième transporteur (2).

2. Système de transport selon la revendication 1, **caractérisé en ce que** le premier transporteur (2) s'étend à angle droit ou sensiblement à angle droit par rapport au deuxième transporteur (3).

3. Système de transport selon la revendication 1, **caractérisé en ce que** le premier transporteur (2) s'étend selon un angle aigu par rapport au deuxième transporteur (3) qui s'ouvre dans le sens opposé au deuxième sens de transport (TR2) du deuxième transporteur (2).

4. Système de transport selon l'une quelconque des revendications précédentes, **caractérisé en ce que** les deuxième et troisième transporteurs (3, 4) s'étendent parallèlement ou sensiblement parallèlement l'un à l'autre.

5. Système de transport selon l'une quelconque des revendications précédentes, **caractérisé en ce que** le deuxième transporteur (3) est formé par deux éléments de transport (3.1, 3.1') s'étendant parallèlement l'un à l'autre qui sont entraînés à une vitesse différente (v1, v2).

6. Système de transport selon l'une quelconque des revendications précédentes, **caractérisé en ce qu'**une ouverture de passage (6) pour les marchandises de détail à transporter est réalisée entre le plan de transport et le retour de l'élément de transport (3.1) tournant du deuxième transporteur (3).

7. Système de transport selon l'une quelconque des revendications précédentes, **caractérisé en ce qu'**un élément glissant (8) formant au moins une surface glissante est prévu entre le premier et le deuxième transporteur (2, 3).

8. Système de transport selon la revendication 7, **caractérisé en ce que** l'élément glissant (8) est réalisé par sections en forme de peigne.

9. Système de transport selon la revendication 7 ou 8, **caractérisé en ce que** l'élément glissant (8) présente une section d'appui (8.3) qui forme une surface d'appui pour l'élément de transport (3.1) du deuxième transporteur (3).

10. Système de transport selon la revendication 9, **caractérisé en ce que** la section d'appui (8.3) présente un évidement (8.3.1) formant un guidage latéral de l'élément de transport (3.1) du deuxième transporteur (3).

11. Système de transport selon l'une quelconque des revendications précédentes, **caractérisé en ce que** l'élément de transport (3.1) du deuxième transporteur (3) présente sur l'arête tournée vers le premier transporteur (2) un évidement (3.1.1) diminuant l'épaisseur de matériau de l'élément de transport (3.1).
